# Europäisches Patentamt
# European Patent Office
# Office européen des brevets

(11) Veröffentlichungsnummer: **0 102 636**
A2

(12) **EUROPÄISCHE PATENTANMELDUNG**

(21) Anmeldenummer: **83108712.7**

(51) Int. Cl.³: **A 01 B 69/00**

(22) Anmeldetag: **05.09.83**

(30) Priorität: **07.09.82 US 414994**

(43) Veröffentlichungstag der Anmeldung:
**14.03.84 Patentblatt 84/11**

(84) Benannte Vertragsstaaten:
**DE FR GB**

(71) Anmelder: **DEERE & COMPANY**
**1 John Deere Road**
**Moline Illinois 61265(US)**

(72) Erfinder: **Winter, David Carl**
**5550 N.W. 57th Ave.**
**Des Moines Iowa 50323(US)**

(72) Erfinder: **Pearson, Michael Lee**
**1313 S.W. Lynn Street**
**Ankeny Iowa 50021(US)**

(72) Erfinder: **Long, John David**
**8975 N.W. Polk City Drive Route Nr. 2 Box 371A**
**Ankeny Iowa 50021(US)**

(74) Vertreter: **Fricke, Joachim, Dr.**
**Dr. R. Döring, Dr. J. Fricke, Patentanwälte**
**Josephspitalstrasse 7**
**D-8000 München 2(DE)**

(54) **Anordnung für die lösbare Anbringung an Geräten zum Erzeugen einer Führungsfurche im Ackerboden.**

(57) Um ein Reihenführungssystem für Bodenbearbeitungs- oder Behandlungsgeräte auf Feldern zu schaffen, welche Reihen von Erntegut aufweisen, ist ein gesonderter Rahmen vorgesehen, der an ein solches Gerät angelenkt werden kann, so daß der Rahmen bei Fahrt über das Feld frei hinter dem Gerät herlaufen und gegenüber dem Gerät seitliche Bewegungen ausführen kann. An diesem gesonderten Rahmen sind unmittelbar hintereinander ein den Boden öffnendes und lockerndes Werkzeug und ein Furchenbildungsrad angeordnet. Beide stehen unter Federvorspannung. Das erste Werkzeug ist an einem federnd nachgiebigen Schaft montiert, während das Furchenbildungsrad unter der Wirkung von nach unten arbeitenden Vorspannfedern steht. Das Furchenrad weist einen Umfang von etwa dreieckförmigem Querschnitt und angrenzend an diesen zwei seitliche Bodenverdichtungskrägen auf, so daß Führungsfurchen von großer Genauigkeit und hoher Stabilität erzeugt werden, die frei von losen Teilen oder dgl. sind und die auch Einflüssen schwerer Unwetter ausreichend standhalten können.

EP 0 102 636 A2

<u>Anordnung für die lösbare Anbringung an Geräten zum Erzeugen einer Führungsfurche im Ackerboden</u>

Die Erfindung bezieht sich auf eine Anordnung für die lösbare Anbringung an Geräten zum Erzeugen einer Führungsfurche im Ackerboden, wenn das Gerät über das Feld gezogen wird, bestehend aus einem an dem Gerät lösbar anbringbaren Rahmen, der ein drehbar gelagertes Furchenformrad von V-förmigem Querschnitt aufweist.

Automatische Führungs- oder Steuerungssysteme für Bearbeitungsgeräte für in Reihen stehendem Erntegut sind seit einiger Zeit in verschiedenen Ausführungsformen bekannt. Der größte Teil dieser Systeme arbeitet mit einer zuvor erzeugten Führungsnut oder Führungsfurche im Erdboden, um eine Bezugsstelle zu erhalten, von der aus das Gerät oder das Fahrzeug geführt wird. Der Erfolg oder der Mißerfolg solcher Systeme hängt im wesentlichen von der Qualität der Führungsfurche in dem Augenblick ab, in dem sie abgetastet wird. Dies kann oft Wochen oder selbst Monate nach der ursprünglichen Herstellung der Führungsfurche der Fall sein. Die Furche muß geeignet sein schwerem Regen zu widerstehen und muß auch frei sein von Klumpen, Steinen oder anderen Hindernissen. Die Größe und die Intaktheit der Furche muß ausreichend zur Führung sein unabhängig von der Art der Abtastvorrichtung, die in dem Führungssystem verwendet wird. Eine nicht ordnungsgemäße Furche kann das Führungssystem nutzlos werden lassen mit dem Ergebnis, daß das Erntegut beschädigt wird, wenn das Bearbeitungsgerät nicht ordnungsgemäß in Bezug auf die Reihen gesteuert wird.

Es sind verschiedene Furchenformvorrichtungen vorgeschlagen worden, die jedoch nicht alle zufriedenstellen arbeiten (vgl. US-PS'n 39 98 275 und 38 40 076). Im letzteren Fall ist ein Halterahmen vorgesehen, der an dem Geräterahmen festklemmbar ist. Der Halterahmen weist eine nach unten ragende Schneidklinge auf, die bei Betrieb deutlich in den Boden eindringt. Der Halterahmen kann beispielsweise an dem Geräterahmen einer Sämaschine zum säen von Erntegut in Reihen angebracht sein, so daß durch die Klinge in dem Boden parallel zu den Säreihen ein Schlitz erzeugt wird. An dem Geräterahmen ist ein weiterer Halterahmen angebracht, an dem ein linsenförmiges Rad frei drehbar unmittelbar hinter der Klinge gelagert ist, so daß das Linsenrad in den Schlitz eindringt, um den Boden beiderseits des Schlitzes zu verdichten und einen schmalen, allgemein V-förmigen und nach oben offenen Schlitz von größerer Tiefe als Breite hinterläßt.

Hierdurch wird jedoch nicht verhindert, daß Steine oder Erdklumpen in den schmalen Furchenschlitz zurückfallen und daß die losen Seitenwände angrenzend an den Schlitz dem Wetter nicht lange standhalten, insb. bei heftigem Regen.

Die starre Montage der zur Erzeugung des Führungsschlitzes dienenden Werkzeuge führt dazu, daß bei Auftreten von Hindernissen wie Steinen oder dgl. der ganze Geräterahmen angehoben wird, so daß die Höhenlagesteuerung des Gerätes stark beeinträchtigt wird.

In den Fällen, in denen die Einrichtung zur Bildung der Führungsfurche auf einem gesteuerten oder geführten Gerät montiert ist, um eine früher hergestellte Führungsfurche nachzuformen, kann es geschehen, daß Querbewegungen des Gerätes, die durch das Führungssystem oder aber auch durch den Fahrer des Ackerschleppers erzeugt werden, dazu führen, daß die nachgeformte Führungsfurche von einer im wesentlichen parallel zu der Pflanzreihe laufenden Linie abweicht. Das führt dazu, daß die
nachgeformte Führungsfurche nicht mehr eine optimale
Führungsfunktion gewährleistet. Dies Problem tritt vor
allem auf, wenn die Einrichtungen zur Bildung der
Führungsfurche an einem Gerät montiert sind, das nachgezogen wird, da anfängliche Steuerkorrekturen durch den
Fahrer augenblicklich das Gerät weiter von der Mittellinie in Bezug auf die Reihen weg auswandern läßt.

Es ist Aufgabe der Erfindung eine Anordnung der Eingangs
näher bezeichneten Art so weiterzubilden, daß die aufgezeigten Schwierigkeiten vollständig oder wenigstens
teilweise vermieden werden können und man eine stabile
Führungsfurche erhält, die weitgehend frei von störenden
losen Erdteilen oder dgl. ist, wobei die Anordnung auch
besonders zum akkuraten Nachformen von bereits früher
gebildeten Führungsfurchen eingesetzt werden kann. Auch
soll die Führungsfurche selbst in festen Böden mit der
gewünschten Tiefe eingearbeitet werden können, während
dennoch die Anordnung störenden Hindernissen zuverlässig
ausweichen soll.

Diese Aufgabe wird dadurch gelöst, daß der Rahmen an
dem Gerät so angelenkt ist, daß der Rahmen dem Gerät
nachläuft und gegenüber diesem seitlich auswandern kann,
um so seitliche Auswanderungen des Gerätes oder des Zugfahrzeuges auszugleichen. Mit dieser Ausbildung werden
die aufgezeigten Nachteile bei der Nachformung einer
zuvor geformten Führungsfurche weitgehend vermieden.
Man kann so mit großer Genauigkeit eine Führungsfurche
nachformen, und zwar mit Hilfe eines Gerätes, das selbst
durch eine Führungsfurche bereits gesteuert oder geführt wird. Querbewegungen des Gerätes oder der Zugmaschine, bezogen auf die Vorwärtsfahrtrichtung, werden
auf diese Weise ausgeglichen und damit in ihrer
störenden Funktion weitgehend kompensiert, so daß die
Furche mit großer Genauigkeit nachgeformt werden kann.

4

Durch die Anlenkung des Tragrahmens für die die Furche erzeugenden Werkstücke an den eigentlichen Geräterahmen wird gewährleistet, daß die Werkzeuge zuverlässig schweren Hindernissen im Boden ausweichen können, ohne daß der ganze Geräterahmen angehoben und damit die Tiefensteuerung des Gerätes beeinträchtigt werden. Außerdem werden die Anordnungen sehr geschont dadurch, daß die Werkzeuge ausweichen können.

Es kann mit Vorteil eine elastische Einrichtung vorgesehen sein, mittels der der Rahmen in eine vorbestimmte vorzugsweise eine zentrale Stellung gegenüber dem Gerät vorgespannt ist. Dadurch wird trotz der seitlichen relativen Beweglichkeit zwischen dem Geräterahmen und dem die Furchenwerkzeuge tragenden Rahmen sichergestellt, daß normalerweise der die Furchenwerkzeuge tragende Rahmen sich selbsttätig in eine zentrale Stellung gegenüber dem Geräterahmen ausrichtet.

Es kann ein armförmiger Tragteil oberhalb eines schaufelartigen, den Erdboden lockernden Werkzeuges an dem Rahmen in vertikaler Richtung schwenkbar gelagert sein, der an seinem freien Ende das Furchenformrad drehbar und unmittelbar in Fahrtrichtung hinter dem Werkzeug unterstützt. Beide Werkzeuge können damit gemeinsam seitlich auswandern. Dennoch können sie unabhängig voneinander in vertikaler Richtung bei Auftreten von Hinternissen oder dgl. ausweichen.

In einer Ausführungsform kann ein mit dem Gerät lösbar verbundener Halter vorgesehen sein, an dem über einen vertikalen Zapfen das vordere Ende des in Fahrtrichtung langgestreckten Rahmens angelenkt ist. Um den Rahmen bedarfsweise auch gegenüber seitliches Ausschwenken relativ zum Gerät zu sperren, kann eine besondere Sperreinrichtung vorgesehen sein, um den Rahmen gegenüber dem Gerät festzulegen.

Eine besonders stabile Führungsfurche erhält man, wenn das Furchenformrad einen im Querschnitt dreieckförmigen Umfangsbereich und radial innerhalb davon nach beiden Seiten vorspringende Bodenverdichtungskrägen aufweist. Ein in dieser Weise ausgebildetes Furchenformrad, das geeignet ist, eine besonders stabile Führungsfurche zu erzeugen, die auch über längere Zeit der Einwirkung des Wetters, insb. der Einwirkung von starken Regenfällen standhält, kann auch im Zusammenhang einer anderen bekannten Anordnung der Werkzeuge an dem Geräterahmen verwendet werden.

Ein solches, in bevorzugter Weise ausgebildetes Furchenformrad sorgt dafür, daß die radial innerhalb des dreieckförmigen Umfanges des Furchenformrades anschließende und vorspringenden kragenförmigen Bodenverdichtungselemente zusammen mit dem dreieckförmigen Umfangsbereich den Boden in der Furche und beiderseits neben der Führungsfurche verdichten.

Der äußere Umfangsbereich kann dabei nach Art eines Fahrzeugreifens auf einem felsenartigen Teil montiert sein, an dem beiderseits die Bodenverdichtungselemente befestigt sind.

Die Erfindung wird nachfolgend anhand schematischer Zeichnungen an einem Ausführungsbeispiel näher erläutert.

Es zeigen:

Figur 1 eine Seitenansicht eines an einem Ackerschlapper montierten Gerätes mit einer zur Herstellung einer Führungsfurche dienenden Anordnung gemäß der Erfindung.

Figur 2 im größeren Maßstabe einen Querschnitt durch das Furchenformrad, wobei der Schnitt entlang der Schnittlinie II-II der Fig. 1 gelegt ist.

Figur 3 eine Draufsicht auf einen Teil des Stützrahmens mit Blickrichtung entsprechend der Pfeile III-III der Figur 1 und

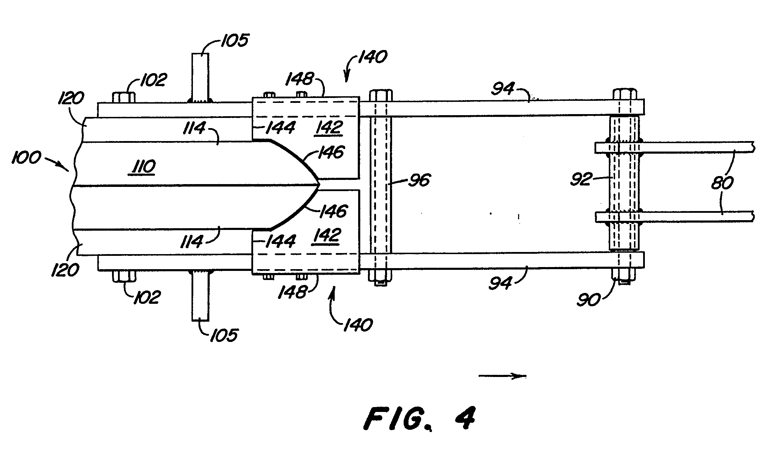

Figur 4 eine Schnittansicht in der Ebene der Schnittlinien IV-IV der Fig. 1, wobei wiederum ein Teil der Stützeinrichtung gezeigt ist.

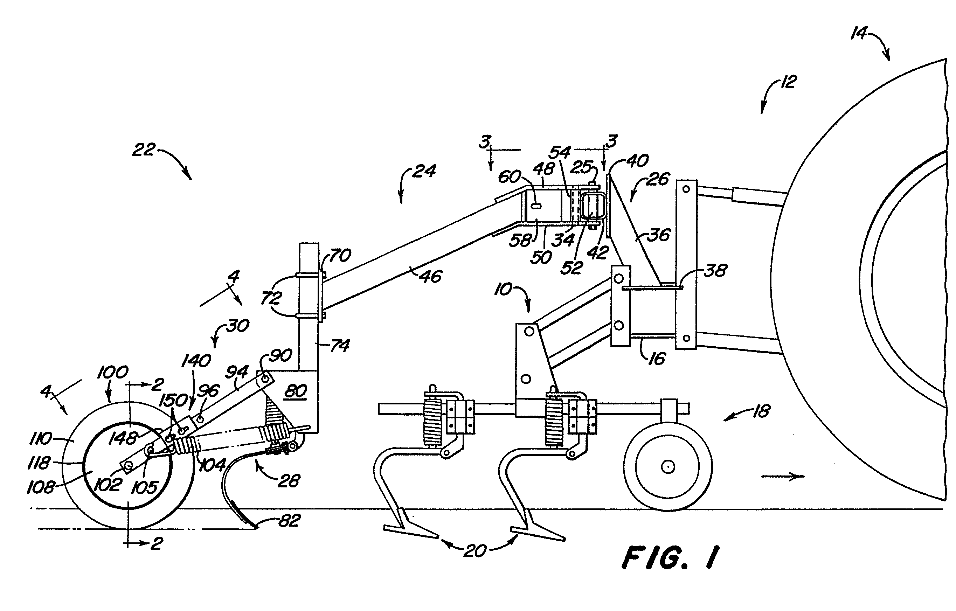

In Fig. 1 ist ein Kultivator 10 für in Reihen stehendes Erntegut gezeigt, der durch eine vertikal einstellbare Kupplungsanordnung 12 an der Rückseite eines Zugfahrzeuges 14 montiert ist, um so in Vorwärtsrichtung über ein mit Reihen bedecktes Feld bewegt zu werden. Der Kultivator 10 umfaßt einen querverlaufenden Werkzeugträger 16, der mehrere übliche Kultivatorschaufeln 18 trägt. Diese sind an dem Werkzeugträger 16 in Querrichtung in Abständen angeordnet und umfassen in den Boden eingreifende Werkzeuge 20, um den Boden zwischen den Reihen der Pflanzen aufzulockern. Ein automatisches Führungs- oder Steuerungssystem (nicht gezeigt) kann an dem Gerät 10 befestigt sein, um die Kultivatorpflüge gegenüber den Reihen in der gewünschten Stellung zu halten. Das Führungssystem umfaßt ein einer Furche folgendes Tastelement, das mit einer früher bereits in dem Boden ausgebildeten Führungsfurche zusammenwirkt. Es ist ersichtlich, daß die neue Anordnung in Verbindung mit zahlreichen anderen Typen von automatischen Führungs- und Steuerungssystemen verwendet werden kann, ebenso wie im Zusammenhang mit manuell gesteuerten oder geführten Geräten.

Wie am Besten aus Fig. 1 hervorgeht, ist eine Furchenbildungsvorrichtung 22 gemäß der Anordnung nach der Erfindung vorgesehen. Diese umfaßt einen sich von vorne nach hinten erstreckenden Rahmen 24, der mit seinem vorderen Ende durch einen aufrechten Zapfen 25 an einem Ständer 26 angelenkt ist. Dieser ist an dem Werkzeugträger 16 zwischen benachbarten Kultivatorpflügen 18 befestigt. Das rückwärtige Ende des Rahmens 24 trägt ein in den Boden eingreifendes Werkzeug 28. Dieses umfaßt bevorzugt eine Federschaftanordnung, welche eine rasche Ausweichmöglichkeit und Rückführung bei Auftreten von Bodenhindernissen ermöglicht. Weiterhin unterstützt das rückwärtige Ende des Rahmens 24 eine das Furchenformrad umfassende Anordnung 30. Diese ist so abgestützt, daß sie unmittelbar hinter der Anordnung 28 zu liegen kommt. Die Schwenkverbindung gestattet es, daß das rückwärtige Ende des Rahmens 24 und damit die Anordnungen 28 und 30 hinter dem Gerät 10 herlaufen. Sie können daher nach rechts oder nach links in Bezug auf das Gerät auswandern, wenn das Gerät sich nach links oder nach rechts in Querrichtung bewegt. Dies kann beispielsweise durch die Führungs- oder Steuerungskorrekturen von der Furchenabtastvorrichtung her oder durch den Fahrer des Ackerschleppers verursacht sein. Durch das Nachlaufen der Anordnungen 28 und 30 gegenüber dem Gerät ergibt sich eine wesentlich größere Genauigkeit der Lage der nachgeformten oder neu gebildeten Furchen gegenüber den Pflanzenreihen, da rasche seitliche Bewegungen durch die Auswanderungsmöglichkeit ausgeglichen werden.

Obwohl die Vorrichtung 22 in Verbindung mit einem Kultivator für in Reihen stehendes Erntegut gezeigt ist, ist ersichtlich, daß die Anordnung auch im Zusammenhang mit zahlreichen anderen Arten von Geräten verwendet werden kann, und zwar entweder um eine bestehende Führungsfurche nachzuformen, oder um erstmals die Führungsfurche zu bilden. Im letzteren Fall kann die Anordnung zum Beispiel mit einer Sämaschine verbunden sein, welche das Erntegut in Reihen sät. Wenn die Anordnung verwendet wird, um erstmals eine Führungsnut zu bilden, kann die Bedienungsperson den Rahmen 24 gegen seitliches Schwenken um den senkrechten Zapfen 34 verriegeln, so daß die Einrichtungen 28 und 30 nicht unter seitlicher Auswanderung hinterherlaufen, sondern daß sie in Querrichtung fixiert sind in Bezug auf das

8

tragende Gerät. Die Vorrichtung 22 wird in ihren Einzelheiten weiter unten beschrieben.

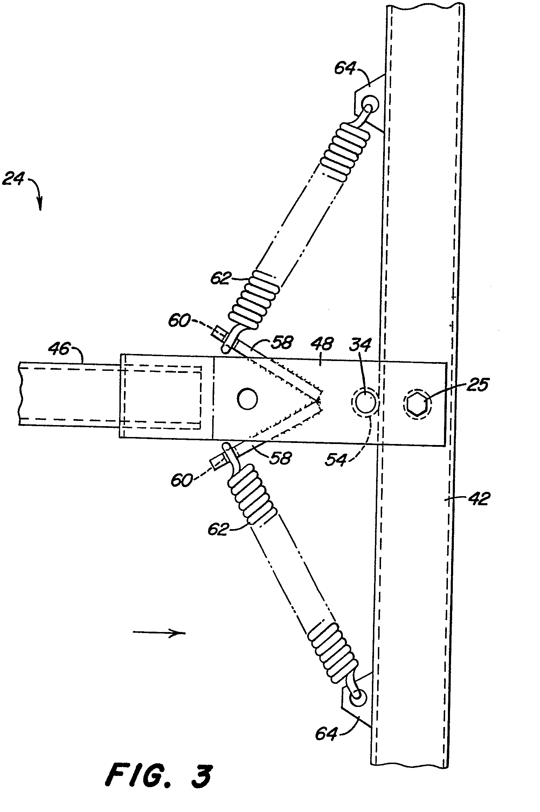

Die Ständeranordnung 26 umfaßt einen nach oben und nach rückwärts geneigten rohrförmigen Träger 36 mit einer unteren horizontalen Montageplatte 38, die in üblicher Weise zum Beispiel mit U-förmigen Bolzen (nicht gezeigt) an der oberen Seite des Werkzeugträgers 16 befestigt werden kann. Eine aufrechte Platte 40 ist an dem oberen Ende des Trägers 36 angeschweißt und unterstützt einen vorderen, quer verlaufenden Träger 42. Das vordere Ende eines nach unten und nach rückwärts gerichteten rohrförmigen Trägers 46 ist zwischen horizontal angeordneten oberen und unteren Rahmenplatten 48 und 50 angeschweißt, die sich entlang der oberen und unteren Flächen des Trägers 42 nach vorne erstrecken. Eine Buchsenanordnung 52 erstreckt sich durch die Flächen des Trägers 42 zwischen den Platten 48 und 50 und nimmt den Stift 25 auf, der es gestattet, daß der Rahmen 24 in Querrichtung verschwenken kann, während eine senkrechte oder vertikale Bewegung im wesentlichen behindert ist. Der Stift 34 erstreckt sich in der eingesetzten Stellung durch die Platten 48 und 50 nahe der rückwärtigen Fläche des Trägers 42 sowie durch eine Buchse 54, die an der Fläche nach Fig. 3 festgeschweißt ist. Der Stift 34 verhindert, daß die Platten 48 und 50 und so der gesamte Rahmen 24 von einer Querstellung, bezogen auf die Achse des Trägers 42 ausschwenken kann.

Zwei aufrechte, nach rückwärts divergierende Plattenglieder 58 sind zwischen den Platten 48 und 50 festgeschweißt und umfassen Öffnungen 60. Zwei identische Federn 62 mit hakenförmigen Enden sind in die Öffnungen 60 eingehakt. Die anderen Enden der Federn 62 sind an entsprechende Federmontageteile 64 angeschlossen, die an der Vorderseite des Trägers 42 an Stellen festgeschweißt sind, welche im gleichen Abstand auf entgegengesetzten Seiten der Platten 48 und 50 angeordnet sind. Die Federn 62 spannen den Rahmen 24 in Richtung auf die zentrale Stellung nach Fig. 3 vor.

Ein aufragender Halter 70 nach Fig. 1 ist an das rückwärtige Ende des Trägers 46 festgeschweißt und umfaßt zwei U-förmige Bolzen 72, welche einstellbar ein vertikales rohrförmiges Glied 74 unterstützen, und zwar rückwärts von den Kultivatorpflügen 18. Der aufrechte Teil 26 sorgt für einen ausreichenden vertikalen Freiraum zwischen dem Gerät 10 und dem Rahmen 25, so daß der Rahmen ohne Konflikt mit irgend einem Teil des Gerätes frei nachlaufen kann.

Zwei aufrechte Platten 8 sind an entgegengesetzten Seiten des Gliedes 74 festgeschweißt und unterstützen eine Montageanordnung (nicht gezeigt), um den Federschaft 28 montieren zu können. Die Anordnung 28 umfaßt vorzugsweise eine Schaufel 82 mit kleiner Spitze zum Lockern des Bodens direkt vor der Radanordnung 30. Die U-förmigen Bolzen 72 können gelockert und der Teil 24 in vertikaler Richtung bewegt werden, um die Eindringtiefe des Werkzeugs 82 in den Boden einstellen zu können.

Die die Furche bildende Radanordnung 30 ist mit den Platten 80 so verbunden, daß sie demgegenüber nach oben oder vertikal verschwenken können. Die Verbindung umfaßt einen Bolzen 90, der sich quer durch eine Buchsenanordnung 92 erstreckt, welche mit den oberen rückwärtigen Ecken der Platten 30 verschweißt ist. Die Anordnung 30 umfaßt zwei in Querrichtung in Abständen angeordnete Arme 94, die sich von den Schwenkverbindungen mit dem Zapfen 90 nach rückwärts und nach unten erstrecken. Ein Abstandsglied 96 ist zwischen zentralen Abschnitten der Arme 94 festgeschraubt. Ein Furchenbildungsrad 100 ist drehbar um die Achse des Querstiftes 102 zwischen den rückwärtigen Enden der Arme 94 gelagert. Das Rad 100 ist in senkrechter Richtung verschwenkbar, und zwar um die Achse des Stiftes oder Bolzens 90. Das Rad steht unter Vorspannung nach unten in Richtung auf den Boden, der durch

10

das schaufelartige Werkzeug 82 aufgelockert ist. Für diese Vorspannung sorgen Federn 104 (Fig. 1), die zwischen den unteren Enden der Platten 80 und zwischen nach außen vorspringenden Stützstiften 105 eingespannt sind, die an den Armen 94 vorgesehen sind. Um zu verhindern, daß die Radanordnung 30 nach unten gegen die Anordnung 28 schwenkt, wenn das Gerät 10 aus der Bodenbearbeitungsstellung aus angehoben wird, ist ein Anschlagglied (nicht gezeigt) vorgesehen, z.B. ein geschlitzter Streifen, der zwischen den Platten 80 und dem Abstandsglied 96 angeordnet ist.

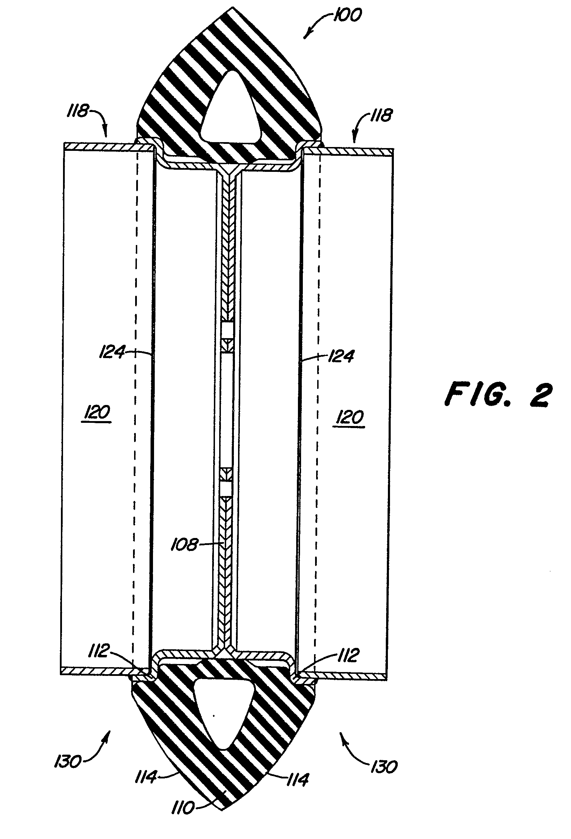

Das Furchenbildungsrad 100 umfaßt eine geschlitzte Felgenanordnung 100, die mit einer üblichen Nabe (nicht gezeigt) verbunden ist, in der der Lagerstift 102 aufgenommen ist. Ein Reifen 110 wird auf der Felgenanordnung 108 zwischen deren Flanschen 112 unterstützt. Wie man am besten aus Fig. 2 erkennen kann, erstreckt sich der Reifen 110 radial außerhalb der Flansche 112 und weist schwach konvex geneigte Seiten oder Flanken 114 auf, welche einen allgemein V-förmigen Bodenbearbeitungsabschnitt begrenzen. Die Flansche 112, die nach außen weisende abgestufte Schultern darbieten, nehmen jeweils ein Tiefensteuerungsband oder einen Verdichtungskragen 118 auf. Diese Kragen bestehen aus zylindrischen bandförmigen Teilen 120, die mit ihrer nach innen weisenden Kante durch die Flansche 112 unterstützt werden. Ein scheibenförmiges Element 124 ist an der nach innen weisenden Kante des Bandes 120 angeschweißt. Die beiden Verdichtungsanordnungen 118 werden gegeneinander und gegen die Schultern der Flansche 112 durch nicht dargestellte Bolzen gepreßt, die sich durch Öffnungen in den Gliedern 124 und 108 erstrecken.

Die Verdichtungskrägen 120 und der Reifen 110 bilden eine die Flanken und Kanten der Führungsfurche verdichtende Anordnung 130, welche die Kanten der Furche verdichten und stabilisieren. Die Verdichtungselemente

11

12o wirken außerdem als Barriere, welche verhindert, daß loser Schmutz, Steine oder Felsbrocken oder dgl. in die Furche fallen. Die Verdichtungselemente 120 bieten darüberhinaus eine Tiefenkontrolle für das Rad 100.

Zwei Schaber 140 sind mit den Armen 94 verbunden, um zu verhindern, daß sich Schmutz an dem Reifen 110 und an den Krägen 120 ansetzen kann. Jeder Schaber 140 weist einen flachen oberen Abschnitt 142 auf, der von der Oberseite der Arme 94 getragen wird und umfaßt eine rückwärtige Kante 144 sowie eine innere Kante 146, welche an die Form der Krägen 120 und der Reifenflanken 114 jeweils angepaßt sind. Ein geschlitztes Seitenelement 148 erstreckt sich unter einem rechten Winkel von dem Abschnitt 142 nach unten. Bolzen 150 sind gemäß Fig. 1 durch Schlitze und durch die Arme 94 geführt und halten die Schaber 140 an den Armen. Die Schlitze ermöglichen eine Einstellung in Fahrtrichtung der Schaber 140, so daß deren Kanten 144 und 146 die gewünschte genaue Stellung gegenüber der Kontur des Rades 100 aufweisen.

Bei Betrieb wird das Gerät 10 durch das Feld geschleppt, wobei die Schaufel 42 des Federschaftes 28 den Boden unmittelbar vor dem Rad 100 öffnet und lockert. Das Rad 100, das durch die Federn 104 nach unten vorgespannt ist, läuft um und rollt in dem Boden ab und bildet dabei eine Furche. Der Reifen 110 zerdrückt dabei Erdklumpen und verdichtet die Seiten der Furche. Die Krägen 118 arbeiten mit dem Reifen 110 zusammen, um die Kanten und die anliegenden bandförmigen Bereiche des Bodens zu verdichten und zu verhindern, daß loses Erdreich oder dgl. in die Furche zurückrollen kann. Der Federschaft 28 sorgt dafür, daß die Schaufel 82 sicher gegenüber Hinternissen im Boden federnd ausweichen kann. Das Rad 100 bewegt sich gegenüber der Vorspannung der Federn 104 ebenfalls ausweichend gegenüber solchen Hinternissen. Damit wird verhindert, daß auf den Rahmen 24 übermäßige Belastungen einwirken, welche dazu führen könnten, den Werkzeugträger 16 des Gerätes anzuheben oder zu verschwenken.

Wenn der Stift 34 von seiner Buchse 52 entfernt ist, kann die Vorrichtung 22 frei hinter dem Gerät 10 herlaufen, wodurch Querbewegungen des Werkzeugträgers 16 ausgeglichen werden. Solche Querbewegungen können durch Steuerkorrekturen am Ackerschlepper oder durch Führungskorrekturen am Gerät oder durch Kombinationen beider Einwirkungen entstehen. Um einen guten Ausgleicheffekt zu erhalten, ist es vorteilhaft, wenn der Abstand zwischen dem Schwenkpunkt 25 und der Achse 102 des Rades 110 wesentlich größer ist als die maximal zu erwartende Querauswanderung des Geräterahmens. Derartige Querauswanderungen sind bei in Reihen stehendem Erntegut typischerweise nur ein Bruchteil des Abstandes zwischen benachbarten Reihen.

Patentansprüche

1. Anordnung für die lösbare Anbringung an Geräten zum
Erzeugen einer Führungsfurche im Ackerboden, wenn
das Gerät über das Feld gezogen wird, bestehend aus
einem an dem Gerät lösbar anbringbaren Rahmen, der
ein drehbar gelagertes Furchformrad von V-förmigem
Querschnitt aufweist, dadurch g e k e n n -
z e i c h n e t , daß der Rahmen (24) an dem Gerät
(10) so angelenkt ist, daß der Rahmen dem Gerät
nachläuft und gegenüber diesem seitlich auswandern
kann, um seitliche Bewegungen des Gerätes (10)
oder des Zugfahrzeuges (14) auszugleichen.

2. Anordnung nach Anspruch 1, dadurch g e k e n n -
z e i c h n e t , daß eine elastische Einrichtung
(58 bis 64) vorgesehen ist, mittels der der Rahmen
(24) in eine vorbestimmte, vorzugsweise eine zentrale Stellung gegenüber dem Gerät (24) vorgespannt
ist.

3. Anordnung nach Anspruch 1 oder 2, dadurch g e -
k e n n z e i c h n e t , daß ein armförmiger Tragteil (94) oberhalb eines schaufelartigen, den Erdboden lockernden Werkzeugs (82) an dem Rahmen (24)
in vertikaler Richtung schwenkbar gelagert ist
und an seinem freien Ende das Furchenformrad (100)
drehbar und unmittelbar - in Fahrtrichtung - hinter
dem Werkzeug (82) unterstützt.

4. Anordnung nach Anspruch 3, dadurch g e k e n n -
z e i c h n e t , daß der Tragteil (94) durch eine
elastische Einrichtung (104) nach unten in Richtung auf den Erdboden vorgespannt ist.

5. Anordnung nach Anspruch 1, dadurch  g e k e n n -
z e i c h n e t , daß ein mit dem Gerät (10) lösbar
verbundener Halter (26) vorgesehen ist, an dem über
einen vertikalen Zapfen (25) das vordere Ende des
in Fahrtrichtung langgestreckten Rahmens (24) angelenkt
ist.

6. Anordnung nach einem der Ansprüche 1 bis 5, dadurch
g e k e n n z e i c h n e t , daß eine Sperreinrichtung (34) vorgesehen ist, um bedarfsweise den Rahmen
(24) gegen seitliches Ausschwenken relativ zum Gerät
(10) festzulegen.

7. Anordnung nach einem der Ansprüche 1-6, dadurch
g e k e n n z e i c h n e t , daß das Furchenformrad
(100) einen im Querschnitt dreieckförmigen Umfangsbereich (110) und radial innerhalb davon nach beiden
Seiten vorspringende Bodenverdichtungskrägen (118)
aufweist.

8. Anordnung für die lösbare Anbringung an Geräten zum
Erzeugen einer Führungsfurche im Ackerboden, wenn das
Gerät über das Feld gezogen wird, bestehend aus einem
drehbar gelagerten Furchenformrad von V-förmigem Querschnitt, dadurch  g e k e n n z e i c h n e t , daß
das Furchenformrad (100) nur in seinem äußeren Umfangsbereich (110) einen etwa dreieckförmigen Querschnitt
aufweist und radial innen an diesem seitlich vorspringende kragenförmige Bodenverdichtungselemente (118)
anschließen, die zusammen mit dem Umfangsbereich den
Boden in der und neben der Führungsfurche verdichten.

9. Anordnung nach Anspruch 8, dadurch  g e k e n n -
z e i c h n e t , daß die Bodenverdichtungselemente
(118) im wesentlichen zur Randachse konzentrische
zylindrische Krägen sind.

10. Anordnung nach Anspruch 8, dadurch g e k e n n - z e i c h n e t , daß der äußere Umfangsbereich (110) nach Art eines Fahrzeugreifens auf einem felgenartigen Teil (108) montiert ist, an dem beiderseits die Bodenverdichtungselemente (118) befestigt sind.

11. Anordnung nach Anspruch 8, dadurch g e k e n n - z e i c h n e t , daß die Querachse (102) des Furchenformrades (100) am hinteren Ende eines Rahmens (24) zur Ausführung vertikaler Bewegungen gegenüber dem Rahmen abgestützt und das vordere Ende des Rahmens um eine vertikale Achse (25) schwenkbar mit dem Gerät (10) verbunden ist, so daß das Furchenformrad (100) dem Gerät (10) nachläuft und gegenüber diesem seitlich auswandern kann.

12. Anordnung nach einem der Ansprüche 8-11 mit einem das Erdreich lockernden schaufelförmigen Werkzeug, dadurch g e k e n n z e i c h n e t , daß dieses Werkzeug (82) im Bereich zwischen dem Gerät (10) und dem Furchenformrad (100) unmittelbar vor diesem Rad abgestützt ist.

13. Anordnung nach Anspruch 12, dadurch g e k e n n - z e i c h n e t , daß das Werkzeug (82) zur gemeinsamen seitlichen Auswanderung mit dem Furchenformrad (100) an dem rückwärtigen Ende des Rahmens (24) abgestützt ist.

14. Anordnung nach einem der Ansprüche 8-13, dadurch g e k e n n z e i c h n e t , daß das Furchenformrad (100) an dem Rahmen (24) mittels eines in einer vertikalen Ebene schwenkbaren Tragarmes (94) angelenkt und durch eine elastische Einrichtung (104) in Richtung auf den Erdboden vorgespannt ist.

15. Anordnung nach Anspruch 14 g e k e n n z e i c h - n e t durch an dem Tragarm (94) angebrachte, der Umfangsform des Furchenrades (100) und der Bodenverdichtungselemente (118) angepaßte Reinigungsschaber (142,144).

16. Anordnung nach einem der Ansprüche 8-15, dadurch g e k e n n z e i c h n e t , daß der Abstand zwischen der Anlenkstelle des vorderen Endes des Rahmens am Gerät von der Drehachse des Furchenformrades wesentlich größer als die maximale seitliche Steuerbewegung des Gerätes gewählt ist.

17. Verfahren zum Herstellen einer Führungsfurche im Erdboden zur Führung eines Gerätes gegenüber einer Saatgut- oder Pflanzreihe, bei dem ein Furchenformrad mit Hilfe eines gezogenen Gerätes über das Feld bewegt wird, dadurch g e k e n n z e i c h n e t , daß man das Furchenformrad durch das Gerät so über das Feld bewegt, daß das Furchenformrad dem Gerät nachläuft und gegenüber diesem seitlich auswandern und rasche seitliche Bewegungen des Gerätes ausgleichen kann.

18. Verfahren nach Anspruch 17, dadurch g e k e n n - z e i c h n e t , daß man jeweils unmittelbar vor dem Furchenformrad den Erdboden mittels eines Werkzeuges bis zu einer ausreichenden Eindringtiefe lockert.

19. Verfahren nach Anspruch 18, dadurch g e k e n n - z e i c h n e t , daß man das Werkzeug jeweils gemeinsam mit dem Furchenformrad gegenüber dem Gerät seitlich auswandern läßt.

20. Verfahren nach einem der Ansprüche 17-19, dadurch
g e k e n n z e i c h n e t , daß man gleichzeitig die
Flanken der Führungsnut und die daran angrenzenden
Bereiche der Ackeroberfläche streifenförmig mit vorbestimmter Kraft verdichtet.

21. Verfahren nach einem der Ansprüche 17-20, dadurch
g e k e n n z e i c h n e t , daß man zum Erneuern
einer schon vorhandenen Führungsfurche das Furchenformrad zum Ausgleich seitlicher Steuerbewegungen
des Gerätes relativ zu dem Gerät seitlich auswandern
läßt.

1/4

FIG. 1

FIG. 2

3/4

FIG. 3

**FIG. 4**